**Europäisches Patentamt**

**European Patent Office**

**Office européen des brevets**

(19)

(11) Veröffentlichungsnummer: **0 031 884**

**A1**

(12) # EUROPÄISCHE PATENTANMELDUNG

(21) Anmeldenummer: **80106962.6**

(22) Anmeldetag: **12.11.80**

(51) Int. Cl.³: **A 01 G 9/22**

(30) Priorität: **15.11.79 DE 2946218**

(43) Veröffentlichungstag der Anmeldung:
**15.07.81 Patentblatt 81/28**

(84) Benannte Vertragsstaaten:
**AT BE CH DE FR GB IT LI LU NL SE**

(71) Anmelder: **Lang, Hans**
**Kirschstrasse 8**
**D-7500 Karlsruhe(DE)**

(72) Erfinder: **Lang, Hans**
**Kirschstrasse 8**
**D-7500 Karlsruhe(DE)**

(54) Schattiervorrichtung für Anlagen der Pflanzenzucht.

(57) Um in Gewächshäusern mit Schattiervorrichtungen die einfallende Lichtmenge über einen größeren Bereich stufenlos verändern zu können, wird ein elastisch dehnbares Gewebe (5) verwendet, das zwischen zwei gegeneinander bewegbaren Aufhängungen (6, 7) angeordnet ist. Die Dehnung des Gewebes und damit seine Lichtdurchlässigkeit erfolgt mittels einer auf einen Motor (10) einwirkenden Steuereinrichtung (20), wobei der Steuereinrichtung oberhalb und unterhalb des Gewebes ein Lux- oder Solarimeter (21, 22) zur Erfassung des einfallenden und eingefallenen Sonnenlichtes sowie ein Sollwertgeber (23) zur Vorgabe der gewünschten Lichteinstrahlung zugeordnet sind und die Steuereinrichtung einen Komparator zum Vergleich der beiden von den Solarimetern gelieferten Istwerte mit dem Sollwert enthält.

FIG 2

EP 0 031 884 A1

Ingenieurbüro LANG                    Unser Zeichen

Karlsruhe                             PA 80 LA 1610

Schattiervorrichtung für Anlagen der Pflanzenzucht

Die Erfindung liegt auf dem Gebiet der Schattiervorrichtungen für Anlagen der Pflanzenzucht und ist bei der konstruktiven Ausgestaltung und Funktionsverbesserung solcher Vorrichtungen anzuwenden.

Zur Regulierung des Wärmehaushaltes in Gewächshäusern und damit zur Erzielung besserer Pflanzerträge ist es üblich, ober- oder unterhalb des Glasdaches Schattiervorrichtungen anzuordnen, mit denen im Bedarfsfall ein Teil oder die gesamte Dachfläche bedeckt werden kann. Als Schattiervorrichtungen sind beispielsweise Rollos, Abdeckfolien oder verstellbare Lamellen bekannt. Auch können vorhangartige Einrichtungen verwendet werden, bei denen breite Stoffbahnen auf- oder zugezogen werden. Diese bekannten Schattiervorrichtungen weisen in aller Regel zwei Arbeitsstellungen auf, nämlich geöffnet oder geschlossen. Dies gilt auch für eine bekannte Vorrichtung, die zugleich als Wärmedämmung ausgebildet ist und bei der ortsfeste Schattierelemente mit beweglichen

- 2 -

Schattierelementen kombiniert sind. Die beweglichen Schattierelemente sind in Abhängigkeit von der Strahlungsintensivität und der Außentemperatur verstellbar. Die hierzu vorgesehenen Rahmen laufen auf Schienen und sind durch einen Motor über eine Welle und eine Zahnstange angetrieben. Sie können aber auch von Zugseilen gezogen werden. Weiterhin ist eine automatische Regelung unter Verwendung eines Steuergerätes mit einem zugeordneten Helligkeitssensor möglich. Zwischenwerte der Lichteinstrahlung, die zwischen voller Öffnung und voller Schließung der beweglichen Schattierelemente liegen, können durch taktweises Öffnen und Schließen der beweglichen Schattierelemente erreicht werden. Sofern kleine Taktzeiten erwünscht oder notwendig sind, führt dies allerdings zu einem unerwünschten Verschleiß der Einrichtung (DE-OS 26 19 793).

Ausgehend von einer Einrichtung zur Schattierung des einfallenden Sonnenlichtes in Anlagen der Pflanzenzucht, die aus einem lichtdurchlässigen, unterhalb oder oberhalb einer Glasfläche angeordneten, durch einen Motorantrieb auf- und zuziehbaren Vorhang besteht, wobei der Motor von einem oberhalb des Vorhanges angeordneten, das von außen einfallende Sonnenlicht (Istwert A) erfassenden Lux- oder Solarimeter mit zugeordneter Steuereinrichtung gesteuert wird, liegt der Erfindung die Aufgabe zugrunde, die Schattiereinrichtung mit zugehöriger Steuereinrichtung so auszugestalten, daß ein diffuser Lichteinfall über einen größeren Lichtwertbereich stufenlos verändert werden kann. Zur Lösung dieser Aufgabe ist gemäß der Erfindung vorgesehen, daß der Vorhang aus einem eindimensional elastisch dehnbaren Gewebe besteht, welches zwischen zwei gegeneinander bewegbaren Aufhängungen angeordnet ist, und daß der Steuereinrichtung ein zweites, unterhalb des Vorhanges angeordnetes Lux- oder Solarimeter zur Erfassung des unterhalb des Vorhanges

- 3 -

eingefallenen Sonnenlichtes (Istwert I) sowie ein Geber zur Vorgabe der gewünschten Lichteinstrahlung (Sollwert V) zugeordnet sind, wobei die Steuereinrichtung einen Komparator zum Vergleich der beiden Istwerte mit dem Sollwert enthält.

Bei der Verwendung eines gemäß der Erfindung ausgebildeten Vorhanges kann die hiermit erfolgende Schattierung in einem größeren Bereich stufenlos variiert werden. Hierzu wird das Gewebe bei zu hoher Lichteinstrahlung vor die Einstrahlöffnung (Fenster, Glasdach) gezogen, wobei die auf das Gewebe eindimensional einwirkenden Zugkräfte je nach Größe zu einer unterschiedlichen Dehnung des Gewebes und damit zu einer unterschiedlichen Licht- und auch Luftdurchlässigkeit führen. Bei zu geringer Lichteinstrahlung kann der Vorhang ganz zurückgezogen werden.

Die gemäß der Erfindung weiterhin vorgesehene Steuer- und Regeleinrichtung bewirkt eine automatische Anpassung der Dehnung des Gewebes an die jeweils gegebenen Lichtverhältnisse. Wesentlich ist dabei die Verwendung eines Komparators, der die außen und innen gegebenen Lichtverhältnisse mit einem in unterschiedlicher Größe vorgebbaren Lichtwert (Sollwert) vergleicht und aufgrund dieses Vergleiches entsprechende Steuerimpulse an den Motorantrieb weitergibt, mit dem der Vorhang auf- oder zugezogen und in zugezogenem Zustand zusätzlich gedehnt wird.

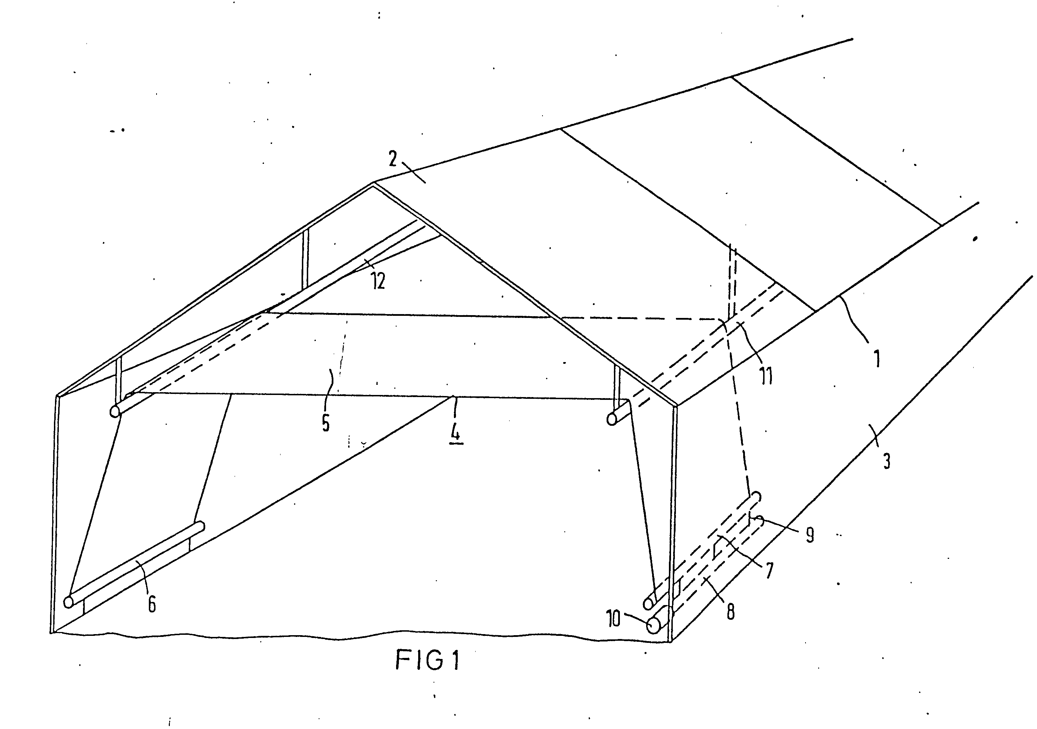

Ein Ausführungsbeispiel der neuen Schattiereinrichtung ist in den Figuren 1 bis 3 dargestellt.
Dabei zeigt Figur 1 eine skizzenhafte Darstellung eines Gewächshauses mit Schattiereinrichtung,
Figur 2 eine Funktionsdarstellung der Schattiereinrichtung und

- 4 -

Figur 3 eine schematische Darstellung der mechanischen
Komponenten.

Figur 1 zeigt ein Gewächshaus 1, bei dem unterhalb des
Daches 2 und innerhalb der Seitenwände 3 eine Schattiereinrichtung 4 angeordnet ist. Diese Schattiereinrichtung
enthält im wesentlichen eine Gewebebahn 5, die aus einem
eindimensional elastisch dehnbaren Gewebe besteht. Die
Gewebebahn 5 ist an dem einen Ende mittels einer stangenförmigen Aufhängung 6 fest eingespannt und am anderen Ende mittels einer stangenförmigen Aufhängung 7 in
Längsrichtung der Gewebebahn beweglich eingespannt. An
der Aufhängung 7 sind Zugseile 9 befestigt, die zu einer von dem Motor 10 antreibbaren Welle 8 führen.
Unterhalb des Daches 2 sind weiterhin die stangenartigen
oder rohrartigen Führungselemente 11 und 12 vorgesehen,
an denen die Gewebebahn 5 umgelenkt wird.

Die Anordnung der Gewebebahn 5 unterhalb des Daches 2
ermöglicht sowohl eine Schattierung des Gewächshauses
als auch eine Steuerung der Temperaturführung in Abhängigkeit von der Luftdurchlässigkeit des elastisch dehnbaren Gewebes.

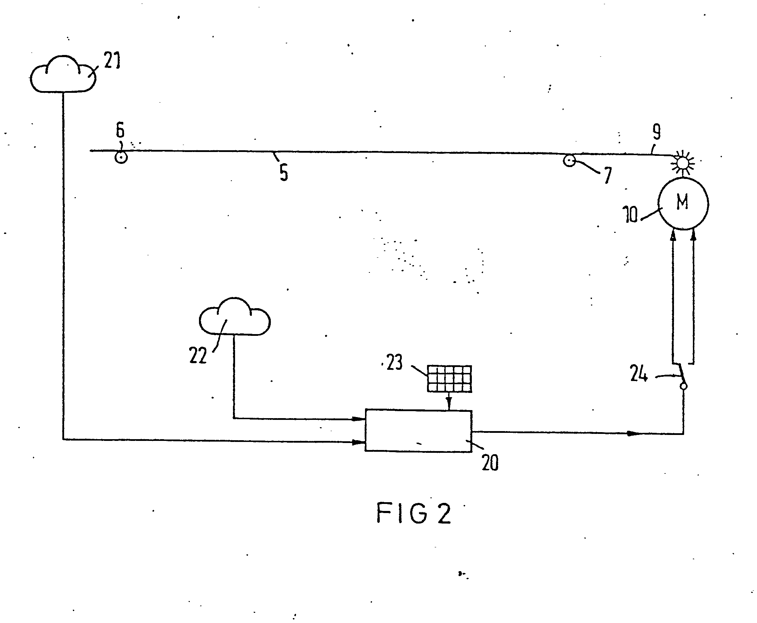

Die elastisch eindimensional dehnbare Gewebebahn 5 kann
mit Hilfe des Motorantriebs 10 und den zugeordneten Zugseilen vollständig auf- und zugezogen und darüber hinaus
im zugezogenen Zustand elastisch gedehnt werden. Hierzu
ist eine elektrische Steuereinrichtung vorgesehen, deren Wirkungsweise aus Figur 2 hervorgeht.

Die dem Motorantrieb 10 zugeordnete Steuereinrichtung
besteht zunächst aus dem Steuergerät 20, den beiden Luxmetern oder Solarimetern 21 und 22, dem Sollwertgeber 23
und dem Schalter 24. Das Luxmeter 21 ist außerhalb des
Gewächshauses oder zumindest oberhalb des elastisch dehn-

- 5 -

baren Gewebes angeordnet und erfaßt die von außen angebotene Lichtmenge. Das Luxmeter 22 ist innerhalb des Gewächshauses unterhalb der dehnbaren Gewebebahn 5 angeordnet und erfaßt die in das Gewächshaus einfallende Lichteinstrahlung. Die jeweils innerhalb des Gewächshauses gewünschte Lichtmenge kann mit dem Sollwertgeber 23 vorgegeben werden, wobei beispielsweise mittels einer Tastatur unterschiedliche Sollwerte vorgebbar sind. Das Steuergerät 20 enthält einen Komparator, der die Meßwerte (Istwerte) der Luxmeter 21 und 22 mit dem durch den Geber 23 vorgegebenen Sollwert vergleicht und aufgrund einer Vergleichsmessung einen entsprechenden Steuerbefehl an den Schalter 24 gibt, der seinerseits je nach Schalterstellung einen Vorlauf oder einen Rücklauf des Motorantriebs 10 auslöst bzw. den Motorantrieb stillsetzt.

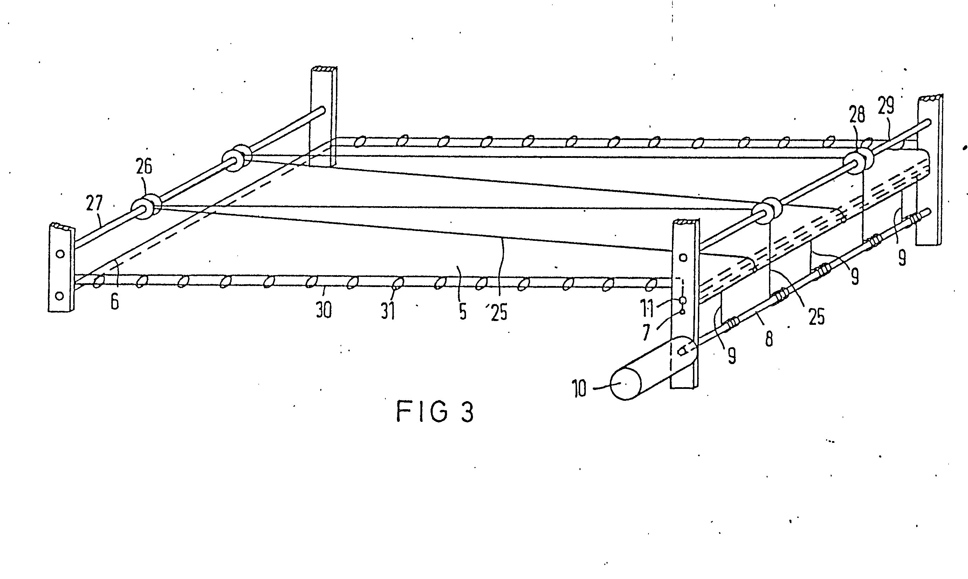

Bei der neuen Schattiervorrichtung kommt der Mechanik, mit der die Dehnung der Gewebebahn 5 hervorgerufen wird, eine gewisse Bedeutung zu. Ein Ausführungsbeispiel für diese mechanischen Komponenten zeigt Figur 3. Dabei ist die elastisch dehnbare Gewebebahn 5 gemäß Figur 1 zwischen der raumfest angeordneten Aufhängung 6 und der in Längsrichtung der Gewebebahn bewegbaren Aufhängung 7 eingespannt. An der bewegbaren Aufhängung 7 greifen Zugseile 9 zum Zuziehen und Dehnen des Gewebes und Zugseile 25 zum Zurückziehen bzw. Aufziehen der Gewebebahn an. Die Zugseile 25 sind dabei über Umlenkrollen 26 (auf der Achse 27 angeordnet) und über Rollen 28 (auf der Achse 29 angeordnet) mit der dem Motor 10 zugeordneten Aufwickelwelle 9 verbunden. Die Gewebebahn 5 ist seitlich mit Hilfe von Ringen 31 in Führungsseilen 30 geführt. Anstelle einer solchen Führung können auch Führungsschienen vorgesehen sein, in denen das Gewebe mittels entsprechender Gleitelemente führbar ist. Eine solche Führung, die beispielsweise ähnlich der Führung von Gardinen und Vorhängen gestaltet sein kann, ist insbesondere dann zu empfehlen, wenn die Gewebebahn 5 in mehreren Ebenen geführt, d. h. umgelenkt, wird.

Abschließend sei zur weiteren Erläuterung der Erfindung ein Zahlenbeispiel gegeben:

Von außen anstehende Lichteinstrahlung, gemessen mit dem Luxmeter 21: 14 000 Lux.

Durch den Sollwertgeber 23 vorgegebener Lichtwert: 8 000 Lux.

Dämpfung des einfallenden Lichtes mit Hilfe des ungedehnten Gewebes 5: 50 %.

Dämpfung des einfallenden Lichtes in Abhängigkeit von der Dehnung des Gewebes 5: 25 bis 50 %.

Bei dem vorgegebenen Zustand von Istwert (außen) und Sollwert führt die Vergleichsmessung in dem Steuergerät 20 zu der Aussage, daß die anstehende Lichtmenge gedämpft werden muß. Demzufolge wird ein Steuerbefehl an den Motor 10 gegeben, der dazu führt, daß der aus der elastisch dehnbaren Gewebebahn 5 bestehende Vorhang zunächst vollständig zugezogen wird. Dies führt zu einem von dem Luxmeter 22 gemessenen Lichtwert von 7 000 Lux. Der Vergleich dieses Lichtwertes mit dem vorgegebenen Sollwert macht eine Dehnung des Gewebes erforderlich. Demzufolge wird ein weiterer Steuerbefehl an den Motor 10 gegeben. Durch die Motorbewegung wird die Gewebebahn 5 so lange gedehnt, bis der von dem Luxmeter 22 gemessene Lichtwert mit dem vorgegebenen Sollwert übereinstimmt.

Für den Fall, daß der vorgegebene Sollwert durch Dehnung der Gewebebahn 5 nicht erreicht werden kann, ist die Einrichtung mit einem Endschalter zu versehen, der eine Überdehnung der Gewebebahn 5 verhindert. In diesem Fall muß in Kauf genommen werden, daß der vorgesehene Sollwert nicht optimal erreicht werden kann.

– 1 –

Patentansprüche

1. Einrichtung zur Schattierung des einfallenden Sonnenlichtes in Anlagen der Pflanzenzucht, bestehend aus einem lichtdurchlässigen, unterhalb oder oberhalb einer Glasfläche angeordneten, durch einen Motorantrieb auf- und zuziehbaren Vorhang, dessen Motor von einem oberhalb des Vorhanges angeordneten, das von außen einfallende Sonnenlicht (Istwert A) erfassenden Lux- oder Solarimeter mit zugeordneter Steuereinrichtung gesteuert wird, d a d u r c h   g e k e n n z e i c h n e t , daß der Vorhang aus einem eindimensional elastisch dehnbaren Gewebe (5) besteht, das zwischen zwei gegeneinander bewegbaren Aufhängungen (6, 7) angeordnet ist, und daß der Steuereinrichtung (20) ein zweites, unterhalb des Vorhanges angeordnetes Lux- oder Solarimeter (22) zur Erfassung des unterhalb des Vorhanges eingefallenen Sonnenlichtes (Istwert I) sowie ein Geber (23) zur Vorgabe der gewünschten Lichteinstrahlung (Sollwert V) zugeordnet sind, wobei die Steuereinrichtung einen Komparator zum Vergleich der beiden Istwerte mit dem Sollwert enthält.

2. Schattierungseinrichtung nach Anspruch 1,  d a - d u r c h   g e k e n n z e i c h n e t , daß ein oder beide gegeneinander bewegbaren Aufhängungen (7) über gegenläufig wirkende Zug- und Rückzugseile (9, 25) einer von dem Motor (10) angetriebenen Auf- und Abwickelvorrichtung (8) zugeordnet sind.

3. Schattierungseinrichtung nach Anspruch 1,  d a - d u r c h   g e k e n n z e i c h n e t , daß das ela- stisch dehnbare Gewebe seitlich in Führungsschienen ge- führt ist.

FIG 1

PA 80 LA 1610

0031884

FIG 2

FIG 3

3/3

PA 80 LA 1610

0031884

0031884

Europäisches
Patentamt

# EUROPÄISCHER RECHERCHENBERICHT

Nummer der Anmeldung

EP 80 10 6962.6

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | DE - A1 - 2 727 288 (PLASCON AG) <br> * Seite 7, Zeilen 13 bis 17 * <br> -- | 1 | A 01 G    9/22 |
| | DE - A1 - 2 756 475 (W. GABLER, GEWÄCHS- HAUSBAU U. HEIZUNGSANLAGEN GMBH) <br> * Anspruch 5 * <br> -- | 3 | |
| D,A | DE - A1 - 2 619 793 (GEBR. GYSI AG) <br> * Seiten 7, 8 * <br> -- | 1 | |
| A | US - A - 3 020 460 (J.O. MORIN et al.) <br> * Spalte 4, Zeile 13 bis Spalte 5, Zeile 50; Fig. 1 * <br> -- | 1 | A 01 G    9/22 <br> F 21 V    11/04 <br> G 03 B    15/06 <br> G 05 D    25/00 |
| A | DE - A1 - 2 805 848 (A. MAYER) <br> * Ansprüche 13 bis 16 * <br> -- | 2 | |
| A | DE - C - 206 665 (HÖNTSCH & CO.) <br> * ganzes Dokument * <br> ---- | | |

RECHERCHIERTE SACHGEBIETE (Int. Cl.³)

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent- familie, übereinstimmendes Dokument

| X | Der vorliegende Recherchenbericht wurde für alle Patentansprüche erstellt. | |
|---|---|---|
| Recherchenort <br> Berlin | Abschlußdatum der Recherche <br> 30-01-1981 | Prüfer <br> SCHOFER |

EPA form 1503.1  06.78